(19) Europäisches Patentamt
European Patent Office
Office européen des brevets

(11) EP 4 815 289 A1

(12) **EUROPEAN PATENT APPLICATION**

(43) Date of publication:
**30.09.2026 Bulletin 2026/40**

(21) Application number: **26167779.3**

(22) Date of filing: **25.03.2026**

(51) International Patent Classification (IPC):
***H02M 7/483*** *(2007.01)*

(52) Cooperative Patent Classification (CPC):
**H02M 7/4835; H02M 7/4833**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **25.03.2025 US 202563777109 P**

(71) Applicant: **Delta Electronics, Inc.**
**Taipei 114501 (TW)**

(72) Inventors:
- **Wang, Ruxi**
  **Morrisville, NC 27560 (US)**
- **Barbosa, Peter Mantovanelli**
  **Taoyuan City 320023 (TW)**
- **Ma, Dihao**
  **Morrisville, NC 27560 (US)**
- **Liu, Jian**
  **Morrisville, NC 27560 (US)**

(74) Representative: **Petraz, Gilberto Luigi et al**
**GLP S.r.l.**
**Viale Europa Unita, 171**
**33100 Udine (IT)**

# (54) MODULAR MULTILEVEL CONVERTER

(57) A modular multilevel converter (MMC) includes a phase leg (PL) including a upper arm (UA) and a lower arm (LA) connected in series, wherein the upper arm (UA) includes a plurality of arms (A1 to Am) connected in parallel, wherein one of the arms (A1 to Am) includes a chain link (CL) and an arm inductor (AI) connected in series, wherein the chain link (CL) includes a plurality of submodules (SM) connected in series, and wherein each submodule (SM) includes a half-bridge circuit (HB) or a full-bridge circuit (FB).

MMC
$+0.5V_{DC}$
SM
CL
AI
PL
UA
CM
LA
$-0.5V_{DC}$

FIG. 1A

HB
FB
$V_{SM}$
$C_{SM}$

FIG. 1B

EP 4 815 289 A1

## Description

FIELD

The disclosure relates to the current scalability of the modular multilevel converter through a simple arm parallel connection. This method does not impact on the original design of the submodule (SM), so the system modularity could be enhanced. Moreover, the disclosure relates to the current sharing control and interleaved modulation methods for the parallelled arms, which can further improve the current quality.

BACKGROUND

A modular converter demonstrates excellent scalability and modularity, thus widely applied in many medium/-high-voltage applications, such as the modular multilevel converter (MMC). The traditional MMC shows voltage scalability, because it can be applied to any voltage class by changing the SM number. However, for a certain fixed voltage rating, an increase in MMC power rating implies higher current capacity. The remaining challenges are the current sharing and energy balancing among the arms.

SUMMARY

The purpose of the disclosure is to provide a current capacity scalable modular multilevel converter using parallel connected arms.

Specifically, the disclosure is related to close-loop control of current sharing and energy balancing control among the parallel arms. Two kinds of methods are proposed, and the first one uses two separated current loops with one extra balancing component to the arm voltage reference. The second method uses the circulating current among parallel arms to balance the energy.

The disclosure is also related to interleaved modulation stage among parallel arms. Both the carrier-based modulation and sorting-based modulation strategies are proposed. In this way, the switching-frequency harmonics of the total arm current could be reduced. The total current quality could be improved.

Furthermore, the coupled arm inductors can be applied to the parallel arms to optimize the total volume of arm inductors.

One embodiment of the disclosure provides a modular multilevel converter, including: a phase leg including a upper arm and a lower arm connected in series, wherein the upper arm includes a plurality of arms connected in parallel, wherein one of the arms includes a chain link and an arm inductor connected in series, wherein the chain link includes a plurality of submodules connected in series, and wherein each submodule includes a half-bridge circuit or a full-bridge circuit.

Optionally, the modular multilevel converter further includes a control module connected to the plurality of submodules, wherein the control module is configured to provide a voltage reference value for each arm by combining a common mode voltage reference value for all of the arms and a differential mode voltage reference value for each arm.

Optionally, the differential mode voltage reference value for each arm is obtained from an output of a current loop combining a differential mode current component of each arm and a differential mode current reference value for each arm.

Optionally, the differential mode current reference value for each arm is obtained from an output of a proportional-integral (PI) controller, and the control module further includes a parallel energy balancing block configured to provide a differential mode voltage component of each arm to the PI controller.

Optionally, the modular multilevel converter further includes a control module connected to the plurality of submodules, wherein the control module is configured to provide a voltage reference value for each arm from an output of a current loop inputting a current reference value for each arm.

Optionally, the current reference value for each arm is obtained by combining a common mode current reference value for each arm and a differential mode current reference value for each arm.

Optionally, the differential mode current reference value for each arm is obtained from an output of a proportional-integral (PI) controller, and the control module further includes a parallel energy balancing block configured to provide a differential mode voltage component of each arm to the PI controller.

Optionally, the common mode current reference value for each arm is obtained by dividing a current reference value of the upper arm with a number of the arms in the upper arm.

Optionally, the modular multilevel converter further includes a control module connected to the plurality of submodules, wherein the control module is modulated by a phase-shift method that carrier phases of submodules in the arm are interleaving, and carrier phases of arms are interleaving.

Optionally, a capacitor voltage reference value for each submodule in one of the arms is provided to the phase-shift method to determine which submodule is bypassed.

Optionally, the capacitor voltage reference value for each submodule in one of the arms is obtained by combining a common mode capacitor voltage reference value and differential mode capacitor voltage reference value for each submodule in one of the arms.

Optionally, the modular multilevel converter further includes a control module connected to the plurality of submodules, wherein the control module is modulated by a level-shift method.

Optionally, a capacitor voltage reference value for each submodule is provided to the level-shift method to determine which submodule is bypassed.

Optionally, the control module is configured that carrier phases of arms are interleaving.

Optionally, according to any one of abovementioned embodiments, the arm inductors of each arm connected in parallel are coupling to each other.

Compared to prior art, the parallel arms of the embodiment of the disclosure can reuse the available SM design so that the power scaling of the MMC gets substantially facilitated. The control module of the embodiment of the disclosure provides close-loop control of current sharing and energy balancing control among the parallel arms. The SM capacitor voltages of the parallel arms are balanced as well. Further, the modulation stage of parallel arms could be interleaved to improve the current quality. Switching frequency harmonics in the total arm current are reduced a lot. Moreover, the coupled arm inductors of the embodiment of the disclosure optimize the total volume of arm inductors.

BRIEF DESCRIPTION OF DRAWINGS

FIG. 1A is a schematic illustration of a three-phase modular multilevel converter (MMC) according to an embodiment of the disclosure.

FIG. 1B illustrates two typical SM topologies of HB and FB according to an embodiment of the disclosure.

FIG. 2 illustrates the current scaling of MMC through parallel-connected arms according to an embodiment of the disclosure.

FIG. 3A is a schematic representation of the simplified model of three parallel arms according to an embodiment of the disclosure.

FIG. 3B is a schematic representation of the simplified model of three parallel arms with different voltage components according to an embodiment of the disclosure.

FIG. 3C is a diagram illustration of the common-mode simplified model of three parallel arms according to an embodiment of the disclosure.

FIG. 3D is a diagram illustration of the circulating simplified model of three parallel arms according to an embodiment of the disclosure.

FIG. 4A illustrates the energy balancing and current sharing control method of parallel arms through separated current loops according to an embodiment of the disclosure.

FIG. 4B illustrates the energy balancing and current sharing control method of parallel arms through a common current loop according to an embodiment of the disclosure.

FIG. 5A is a diagram illustration of the phase-shift carrier-based modulation method for parallel arms according to an embodiment of the disclosure.

FIG. 5B is a diagram illustration of the interleaved carrier waveform according to an embodiment of the disclosure.

FIG. 6A is a diagram illustration of the level-shift sorting-based modulation method for parallel arms according to an embodiment of the disclosure.

FIG. 6B is a diagram illustration of the interleaved level-shift carrier waveform according to an embodiment of the disclosure.

FIG. 7A is the simulation waveforms of MMC with only one arm according to an embodiment of the disclosure.

FIG. 7B is the simulation waveforms of MMC with three parallel arms and the proposed energy control balancing method and interleaved modulation strategy according to an embodiment of the disclosure.

FIG. 8 is a diagram illustration of three parallel arms with coupled inductors according to an embodiment of the disclosure.

DETAILED DESCRIPTION

In order to make the above and other objects, features, and advantages of the disclosure easier to understand, preferred embodiments of the disclosure will be illustrated below and described in detail with reference to the drawings. In addition, in the drawings, structurally similar units are represented by the same reference numerals.

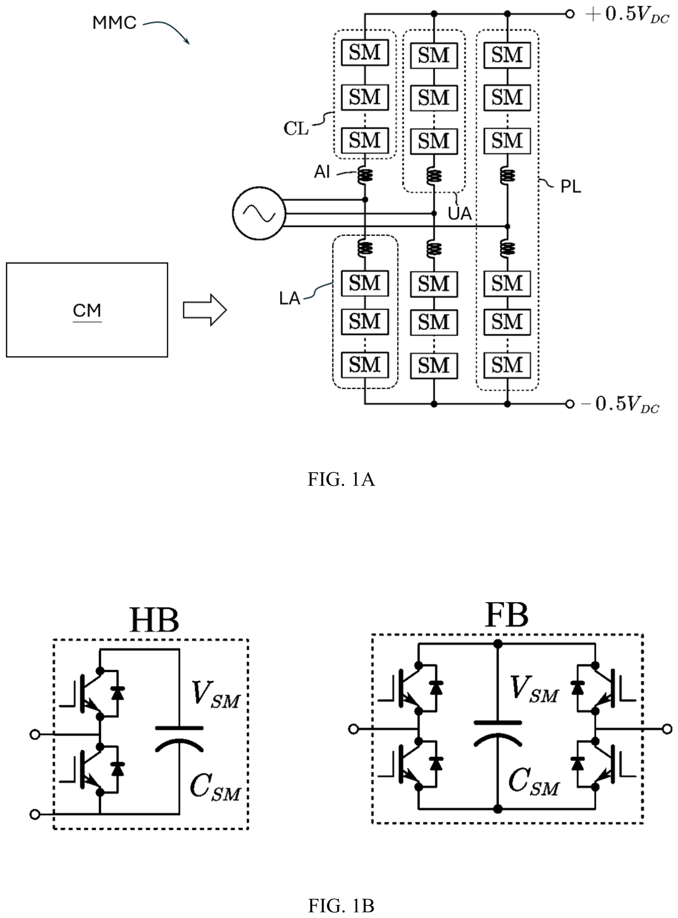

Referring to FIG. 1A, FIG. 1B, FIG. 2, and FIG. 4A, FIG. 1A is a schematic illustration of a three-phase modular multilevel converter (MMC) according to an embodiment of the disclosure. FIG. 1B illustrates two typical submodule SM

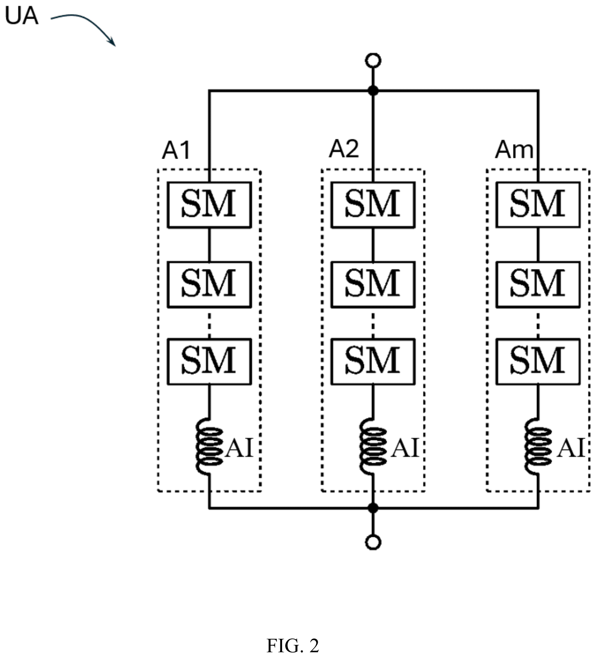

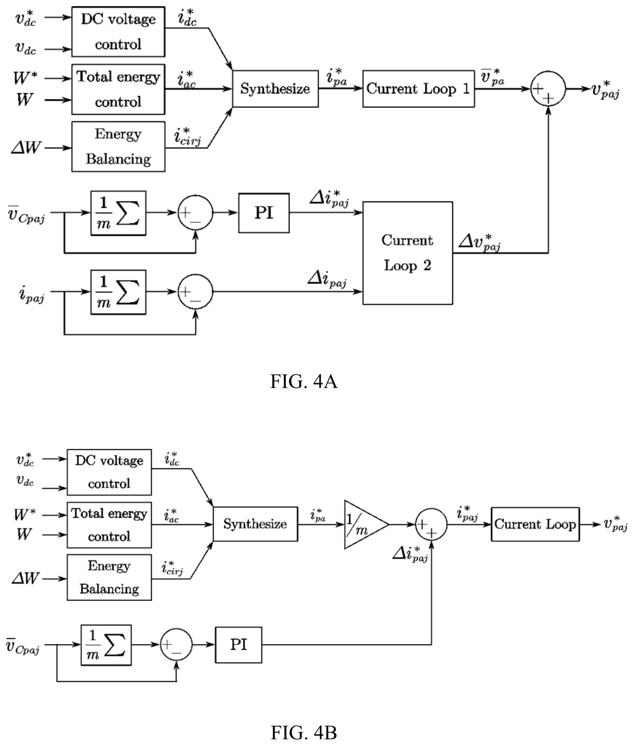

topologies of half-bridge HB circuit and full-bridge FB circuit according to an embodiment of the disclosure. FIG. 2 illustrates the current scaling of MMC through parallel-connected arms according to an embodiment of the disclosure. FIG. 4A illustrates the energy balancing and current sharing control method of parallel arms through separated current loops according to an embodiment of the disclosure. One embodiment of the disclosure provides a modular multilevel converter MMC, including: a phase leg PL including a upper arm UA and a lower arm LA connected in series, wherein the upper arm UA includes a plurality of arms A1 to Am connected in parallel (referring to FIG. 2 for arms in parallel, FIG. 1A shows only one arm for simplicity), wherein one of the arms A1 to Am includes a chain link CL and an arm inductor AI connected in series, wherein the chain link CL includes a plurality of submodules SM connected in series, and wherein each submodule SM includes a half-bridge circuit HB or a full-bridge circuit FB (referring to FIG. 1B); and a control module CM connected to the plurality of submodules SM, wherein the control module CM is configured to provide a voltage reference value $\upsilon_{paj}^{*}$ for each arm by combining a common mode voltage reference value $\bar{\upsilon}_{pa}^{*}$ for all of the arms and a differential mode voltage reference value $\Delta\,\upsilon_{paj}^{*}$ for each arm (referring to FIG. 4A).

FIG. 1A demonstrates the schematic of modular multilevel converter MMC. The modular multilevel converter MMC contains six power converter arms (upper arms UA or lower arms LA). Each power converter arm includes one arm inductor AI and one chain link CL. The chain link CL is made up of the series connected submodules SM, such as half-bridge circuit HB or a full-bridge circuit FB in FIG. 1B.

Modular converters demonstrate excellent scalability and modularity and can be applied in medium/high voltage applications. The modular multilevel converter MMC in FIG. 1A may be used in the high voltage direct current transmission. The modular structure also enables "N+1" redundancy for better system-level reliability.

Depending on the applications, the submodule SM topologies of the embodiments could be half bridge HB or full bridge FB in FIG. 1B. As shown in FIG. 1A, the chain link CL includes series-connected submodule SM, while a chain link CL in series connection of an arm inductor AI is referred to as the upper arm UA or the lower arm LA. Then the upper arm UA in series connection of the lower arm LA is referred to as one phase leg PL.

The modular multilevel converter MMC shows voltage scalability, because it can be applied to any voltage class by changing the SM number. However, for a certain fixed voltage rating, an increase in modular multilevel converter MMC power rating implies higher current capacity. Typical examples include power transmission and medium voltage drive. Obviously, the current scalability is not so easy and straightforward and may hinder the system modularity.

The feasible current scalability options for modular multilevel converter MMC based on available design are given in FIG. 2. In FIG. 2, m identical arms A1 to Am in available design are connected in parallel to form an upper arm UA and to increase the current capacity by m. The lower arm LA can include the same or different structure as the upper arm UA with the same current capacity.

FIG. 2 shows the current scaling design for modular multilevel converter MMC. As explained, the parallel arms method can reuse the available SM design, thus having better current modularity.

In order to control the differential mode current between arms A1 to Am in the upper arm UA or the lower arm LA, two kinds of methods are proposed. The first method in FIG. 4A uses the extra current loop to generate the extra differential mode voltage reference component $\Delta\,\upsilon_{paj}^{*}$. Then each arm voltage reference could be obtained as,

$$\upsilon_{paj}^{*} = \bar{\upsilon}_{pa}^{*} + \Delta\,\upsilon_{paj}^{*} \qquad (1)$$

In this way, the common current loop could be used to control each arm's current directly to get individual arm voltage reference $\upsilon_{\mathrm{paj}}^{*}$.

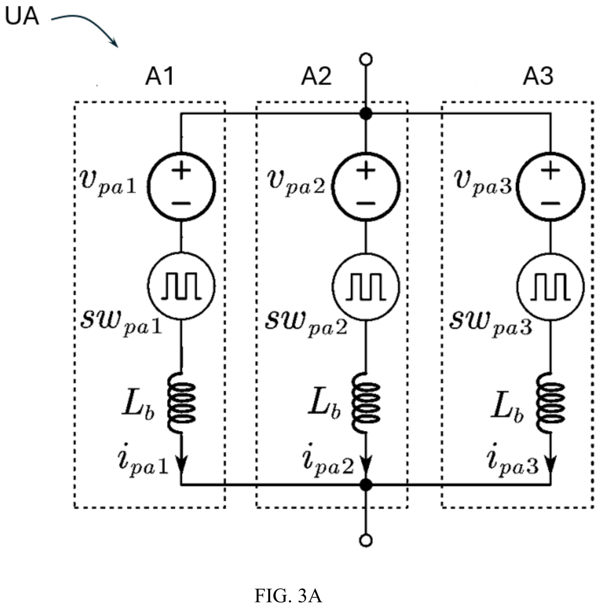

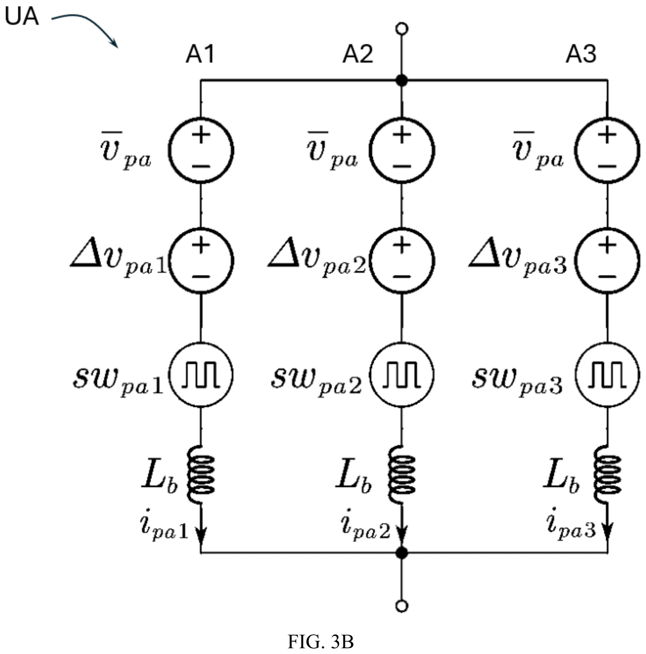

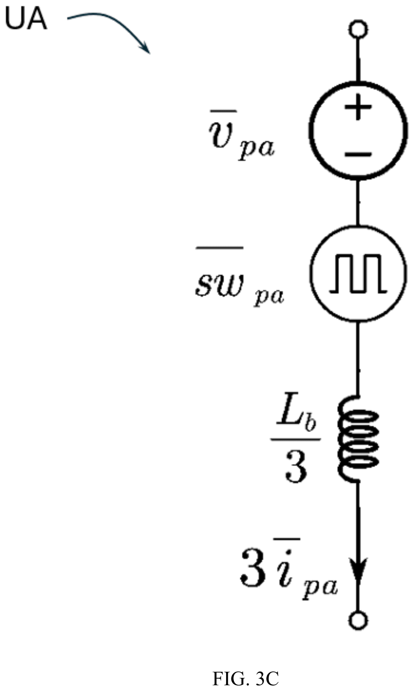

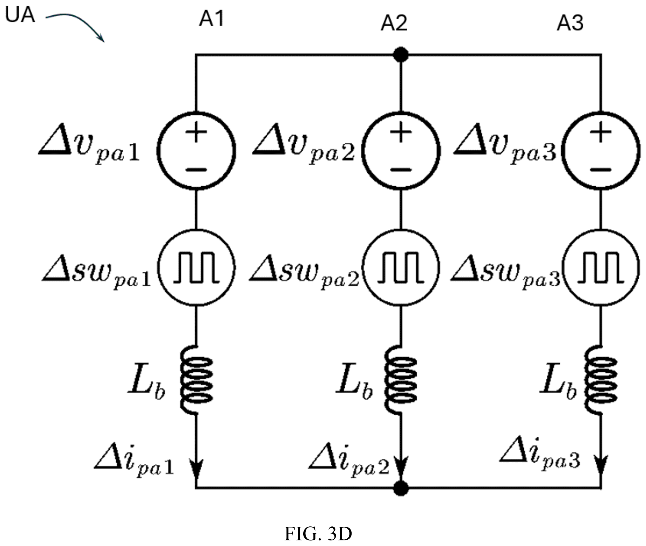

In detail, referring to FIG. 3A to FIG. 3D, FIG. 3A is a schematic representation of the simplified model of three parallel arms according to an embodiment of the disclosure. FIG. 3B is a schematic representation of the simplified model of three parallel arms with different voltage components according to an embodiment of the disclosure. FIG. 3C is a diagram illustration of the common-mode simplified model of three parallel arms according to an embodiment of the disclosure. FIG. 3D is a diagram illustration of the circulating simplified model of three parallel arms according to an embodiment of the disclosure. By using an average modeling method to lump the CL to a controlled voltage source $\upsilon_{paj}$ and equivalent switching frequency voltage source $\mathcal{SW}_{paj}$, the former can control the DC and AC side voltage or current, whereas the latter is the total equivalent switching frequency voltage of whole CL with the sum of magnitude of singe submodule DC-link voltage $\upsilon_{SMj}$. Therefore, it determines the total harmonic distortion (THD) and quality of the arm current. Referring to the same process, three parallel arms can be replaced with three voltage sources $\upsilon_{pa1}$, $\upsilon_{pa2}$, $\upsilon_{pa3}$, in a series connection with three switching frequency voltage source $\mathcal{SW}_{pa1}$, $\mathcal{SW}_{pa2}$, $\mathcal{SW}_{pa3}$ and three arm inductor $L_b$

in FIG. 3A. Three arm currents are denoted as $i_{pa1}$, $i_{pa2}$, and $i_{pa3}$ respectively. Referring to FIG. 3B and FIG. 3C, the average components can be defined below,

$$\begin{aligned} \bar{v}_{pa} &= \frac{1}{3}\left(v_{pa1} + v_{pa2} + v_{pa3}\right) \\ \overline{SW}_{pa} &= \frac{1}{3}\left(SW_{pa1} + SW_{pa2} + SW_{pa3}\right) \\ \bar{i}_{pa} &= \frac{1}{3}\left(i_{pa1} + i_{pa2} + i_{pa3}\right) \end{aligned} \quad (2)$$

Then referring to FIG. 3D, the differential mode voltage component could be defined as,

$$\begin{cases} \Delta v_{pa1} = v_{pa1} - \bar{v}_{pa} \\ \Delta v_{pa2} = v_{pa2} - \bar{v}_{pa} \\ \Delta v_{pa3} = v_{pa3} - \bar{v}_{pa} \end{cases}, \begin{cases} \Delta SW_{pa1} = SW_{pa1} - \overline{SW}_{pa} \\ \Delta SW_{pa2} = SW_{pa2} - \overline{SW}_{pa} \\ \Delta SW_{pa3} = SW_{pa3} - \overline{SW}_{pa} \end{cases}, \begin{cases} \Delta i_{pa1} = i_{pa1} - \bar{i}_{pa} \\ \Delta i_{pa2} = i_{pa2} - \bar{i}_{pa} \\ \Delta i_{pa3} = i_{pa3} - \bar{i}_{pa} \end{cases} \quad (3)$$

In this way, the common-mode component of three parallel arms can be merged into a representative single arm as shown in FIG. 3C. The new arm includes the equivalent voltage sources $\bar{v}_{pa}$ and $\overline{SW}_{pa}$, and the arm inductor $L_b$/3 with the arm current3$\bar{i}_{pa}$. As a result, the model of modular multilevel converter MMC with parallel arms is the same as the modular multilevel converter MMC with single arm.

Apart from the common-mode component, the differential mode component forms the circulating current paths for the parallel arms in FIG. 3D. The differential mode component $\Delta v_{pa1}$,$\Delta v_{pa2}$,$\Delta v_{pa3}$ will not influence the current flowing through the total arm and only control the circulating current to balance the energy among parallel arms.

Energy balancing is important for the proper operation of modular multilevel converter MMC. High-level control, such as DC voltage control, total energy control, and upper-lower arm energy balancing can be used to generate the current reference $i_{pa}^*$ as shown in FIG.4A and FIG. 4B. If m arms are connected in parallel, then each arm's current reference could be equally divided to ensure the current sharing.

$$i_{paj}^* = \frac{1}{m} i_{pa}^* \quad (4)$$

An extra parallel energy balancing block can be implemented by controlling and injecting the differential mode current to each parallel arm.

$$P_{paj} = \left(\bar{v}_{pa}^* + \Delta v_{paj}\right) \cdot \left(\frac{1}{m} i_{pa}^* + \Delta i_{paj}^*\right) \quad (5)$$

Therefore, the differential mode current reference could be generated through the PI control between the average arm energy and each arm energy.

$$\Delta i_{paj}^* = \left(K_p + \frac{K_i}{s}\right)\left(\frac{1}{m}\sum_{j=1}^{m} \bar{v}_{Cpaj} - \bar{v}_{Cpaj}\right) \quad (6)$$

Where $K_p$ and $K_i$ are the control parameters of the PI controller, respectively. $\bar{v}_{Cpaj}$ is an average value of capacitor voltages of all submodules SM on one arm A1 to Am. It should be noted that other controllers can be used here as well.

Referring to FIG. 4A, optionally, the differential mode voltage reference value $\Delta v_{paj}^*$ for each arm is obtained from an output of a current loop combining a differential mode current component $\Delta i_{paj}$ of each arm and a differential mode current reference value $\Delta i_{paj}^*$ for each arm.

Optionally, the differential mode current reference value $\Delta i^{*}_{paj}$ for each arm is obtained from an output of a proportional-integral (PI) controller.

Optionally, the control module CM further includes a parallel energy balancing block (not shown) configured to provide a differential mode voltage component $\Delta \upsilon_{Cpaj} = \upsilon_{Cpaj} - \bar{\upsilon}_{Cpa}$ of each arm to the PI controller.

Optionally, the common mode voltage reference value $\bar{\upsilon}^{*}_{pa}$ is obtained from an output of a current loop inputting a current reference value $i^{*}_{pa}$ of the upper arm UA.

Referring to FIG. 1A, FIG. 1B, FIG. 2, and FIG. 4B, One embodiment of the disclosure further provides a modular multilevel converter MMC, including: a phase leg PL including a upper arm UA and a lower arm LA connected in series, wherein the upper arm UA includes a plurality of arms A1 to Am connected in parallel, wherein one of the arms A1 to Am includes a chain link CL and an arm inductor AI connected in series, wherein the chain link CL includes a plurality of submodules SM connected in series, wherein each submodule SM includes a half-bridge circuit HB or a full-bridge circuit FB; and a control module CM connected to the plurality of submodules SM, wherein the control module CM is configured to provide a voltage reference value $\upsilon^{*}_{paj}$ for each arm from an output of a current loop inputting a current reference value $i^{*}_{paj}$ for each arm.

Referring to FIG. 4B, the main difference between this embodiment and the previous embodiment is the algorithm of the control module CM of this embodiment. In order to control the differential mode current between arms A1 to Am in the upper arm UA or the lower arm LA, two kinds of methods are proposed. The second method shown in FIG. 4B combines the differential mode current reference value $\Delta i^{*}_{paj}$ with the common mode current reference $\frac{1}{m} i^{*}_{pa}$ to get the current reference of each parallel arm $i^{*}_{paj}$.

$$i^{*}_{paj} = \frac{1}{m} i^{*}_{pa} + \Delta i^{*}_{paj} \qquad (7)$$

In this way, the common current loop could be used to control each arm's current directly to get individual arm voltage reference $\upsilon^{*}_{\text{paj}}$.

Optionally, the current reference value $i^{*}_{paj}$ for each arm is obtained by combining a common mode current reference value $\frac{1}{m} i^{*}_{pa}$ for each arm and a differential mode current reference value $\Delta i^{*}_{paj}$ for each arm.

Optionally, the differential mode current reference value $\Delta i^{*}_{paj}$ for each arm is obtained from an output of a proportional-integral (PI) controller.

Optionally, the control module CM further includes a parallel energy balancing block (not shown) configured to provide a differential mode voltage component $\Delta \upsilon_{Cpaj} = \upsilon_{Cpaj} - \bar{\upsilon}_{Cpa}$ of each arm to the PI controller.

Optionally, the common mode current reference value $\frac{1}{m} i^{*}_{pa}$ for each arm is obtained by dividing a current reference value $i^{*}_{pa}$ of the upper arm UA with a number m of the arms in the upper arm UA.

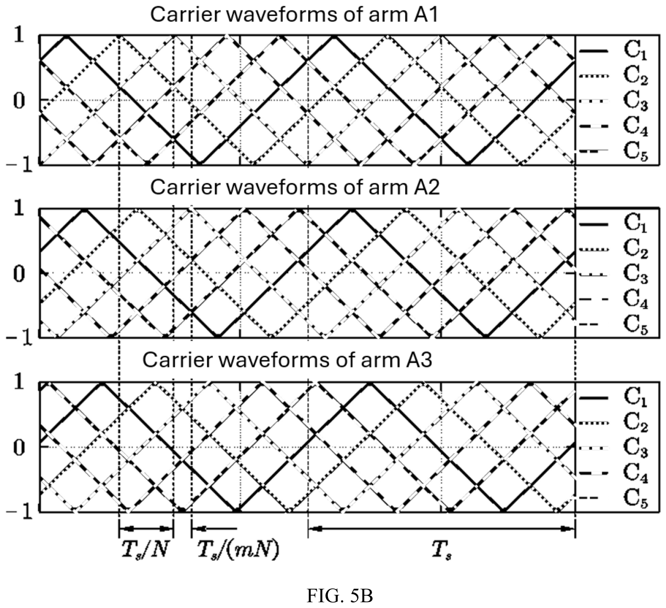

Referring to FIG. 1A, FIG. 1B, FIG. 2, FIG. 5A, and FIG. 5B, FIG. 5A is a diagram illustration of the phase-shift carrier-based modulation method for parallel arms according to an embodiment of the disclosure. FIG. 5B is a diagram illustration of the interleaved carrier waveform according to an embodiment of the disclosure. One embodiment of the disclosure further provides a modular multilevel converter MMC, including: a phase leg PL including a upper arm UA and a lower arm LA connected in series, wherein the upper arm UA includes a plurality of arms A1 to Am connected in parallel, wherein one of the arms A1 to Am includes a chain link CL and an arm inductor AI connected in series, wherein the chain link CL includes a plurality of submodules SM connected in series, wherein each submodule SM includes a half-bridge circuit HB or a full-bridge circuit FB; and a control module CM connected to the plurality of submodules SM, wherein the control module CM is modulated by a phase-shift method that carrier phases of submodules SM in the arm are interleaving, and carrier phases of arms are interleaving.

In detail, the carrier phase-shifted modulation (CPS-PWM) process of a modular multilevel converter MMC involves shifting the phase of a triangular carrier wave according to the number of submodules SM and comparing it with a reference wave to control the on/off state of each submodule SM. In FIG. 5B, period $T_s$ of the carriers $C_1$ to $C_5$ are identical.

Phase shift of carriers $C_1$ to $C_5$ in one arm is $T_s/N$. Phase shift of carriers $C_1$ between different arms is $T_s/mN$.

The average voltage source in each arm controls the voltage or current of medium-voltage alternating current (MVAC) and MVDC side, while the switching frequency harmonics are controlled by the switching frequency component $\mathcal{SW}_{pa}$ . If the same modulation stage is applied to parallel arms, there is no interleaving of the switching frequency component among each arm.

$$\overline{\mathcal{SW}}_{pa} = \mathcal{SW}_{pa1} = \mathcal{SW}_{pa2} = \mathcal{SW}_{pa3} \qquad (8)$$

As a result, the switching frequency harmonic percentage of the total arm current will be the same as each parallel arm. It also means the differential mode current will not contain any switching frequency component theoretically.

On the contrary, interleaving among parallel arms is feasible to reduce the harmonics of total arm current by modifying the modulation stage. Two types of modulation methods are used as examples here, but interleaving can be applied to other modulation methods as well.

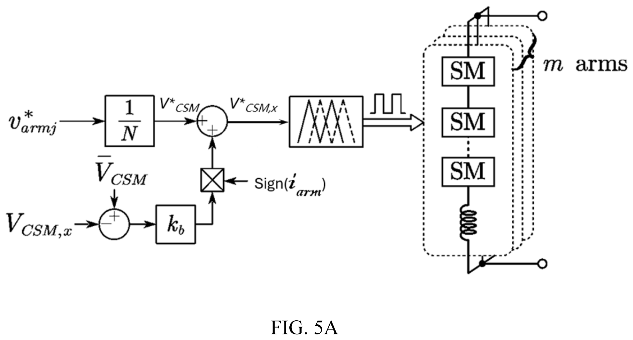

The carrier-based modulation method is shown in FIG. 5A. Supposing the phase-shift modulation method is applied inside each arm with N SMs, then the phase-shift angle is $2\pi/N$. In order to interleave the arms, the carrier phase-shift angle of $m$ parallel arms is defined as $2\pi/mN$. The carrier waveforms with the example of N=5, m=3 are given in FIG. 5B.

Optionally, a capacitor voltage reference value $v^*_{CSM,x}$ for each submodule SM in one of the arms is provided to the phase-shift method to determine which submodule SM is bypassed. In detail, to balance the capacitor voltages $v_{CSM,x}$ of each submodule SM and maintain them within a suitable range, during the current inflow phase (sign($i_{arm}$)>0), the submodule SM with the lower capacitor voltage can be turned on to charge it, and during the current outflow phase(sign($i_{arm}$)<0), the submodule SM with the higher capacitor voltage can be turned on to discharge it.

Optionally, the capacitor voltage reference value $V^*_{CSM,x}$ for each submodule SM in one of the arms is obtained by combining a common mode capacitor voltage reference value $V^*_{CSM} = \frac{1}{N} v^*_{armj}$ and differential mode capacitor voltage reference value for each submodule SM in one of the arms. $K_b$ is an adjustable constant used to determine the rate of voltage balance convergence.

Optionally, in an upper arm UA, number of the plurality of arms connected in parallel is m, number of the submodule SM in the arm is N, a carrier phase-shift angle of N submodules SM in the arm is defined as $2\pi/N$, and a carrier phase-shift angle of m parallel arms A1 to Am is defined as $2\pi/mN$.

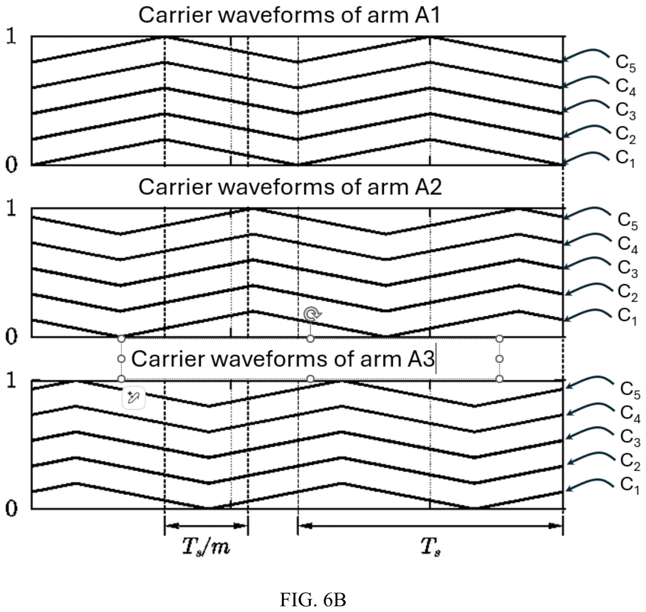

Referring to FIG. 1A, FIG. 1B, FIG. 2, FIG. 6A, and FIG. 6B, FIG. 6A is a diagram illustration of the level-shift sorting-based modulation method for parallel arms according to an embodiment of the disclosure. FIG. 6B is a diagram illustration of the interleaved level-shift carrier waveform according to an embodiment of the disclosure. One embodiment of the disclosure further provides a modular multilevel converter MMC, including: a phase leg PL including a upper arm UA and a lower arm LA connected in series, wherein the upper arm UA includes a plurality of arms A1 to Am connected in parallel, wherein one of the arms A1 to Am includes a chain link CL and an arm inductor AI connected in series, wherein the chain link CL includes a plurality of submodules SM connected in series, wherein each submodule SM includes a half-bridge circuit HB or a full-bridge circuit FB; and a control module CM connected to the plurality of submodules SM, wherein the control module CM is modulated by a level-shift method.

In detail, MMC Level-Shift PWM process of a modular multilevel converter MMC involves comparing a sinusoidal modulated signal with multiple vertically offset triangular carriers, each corresponding to a submodule SM. The comparison results control the on/off state of each submodule SM, achieving high-level output and balancing the voltages of each module.

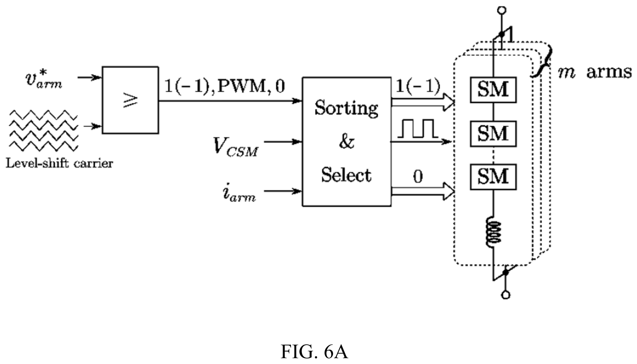

If the sorting-based method is used in each arm as shown in FIG. 6A, the level-shift carrier is usually adopted to generate the working modes of insertion, bypass, and PWM. Then the phase angle of the carrier could be shifted among m parallel arms with the phase-shift angle of $2\pi/m$. The carrier waveforms with the example of N=5, m=3 are given in FIG. 6B.

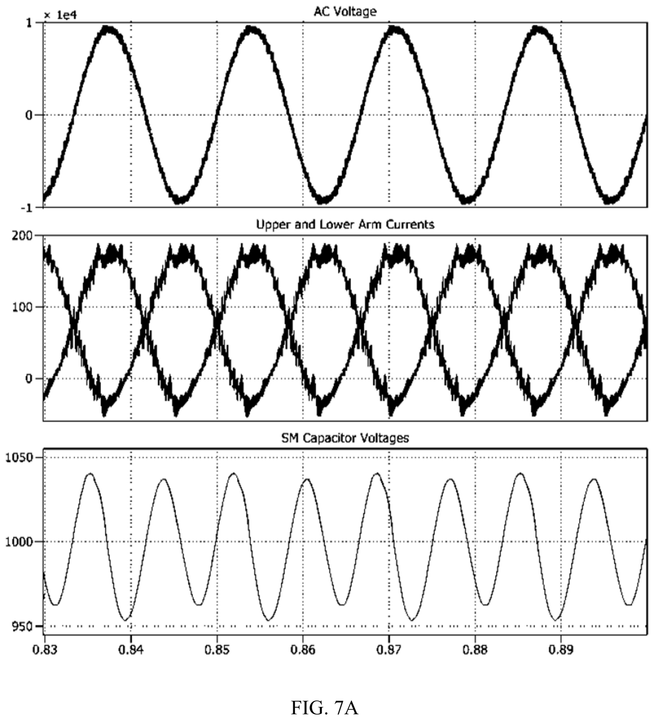

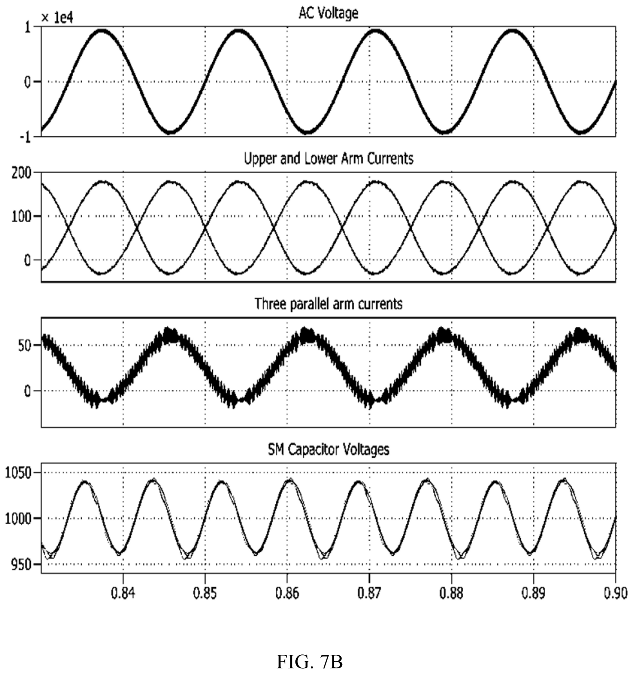

Referring to FIG. 7A and FIG. 7B, FIG. 7A is the simulation waveforms of MMC with only one arm according to an embodiment of the disclosure. FIG. 7B is the simulation waveforms of MMC with three parallel arms and the proposed energy control balancing method and interleaved modulation strategy according to an embodiment of the disclosure. FIG. 7A shows the results of the modular multilevel converter MMC with a single arm, while FIG. 7B shows the results of three parallel arms adopting the proposed parallel arm energy balancing and interleaving method. It can be observed that the switching frequency harmonics in the total arm current are reduced a lot. The SM capacitor voltages of three parallel arms are balanced as well.

Optionally, a capacitor voltage reference value $V^*_{CSM,x}$ for each submodule SM is provided to the phase-shift

method to determine which submodule SM is bypassed. In detail, $V_{CSM}$ is an instantaneous measurement of the capacitor voltage of submodule SM. All capacitor voltage measurements are sorted according to the transient direction of the arm current $i_{arm}$ to assign different switching states to different submodules. To balance the capacitor voltages $\upsilon_{CSM,x}$ of each submodule SM and maintain them within a suitable range, during the current inflow phase (sign($i_{arm}$)>0), the submodule SM with the lower capacitor voltage can be turned on to charge it, and during the current outflow phase(sign($i_{arm}$)<0), the submodule SM with the higher capacitor voltage can be turned on to discharge it.

Optionally, in the upper arm UA, number of the plurality of arms connected in parallel is m, number of the submodule in the arm is N, a carrier phase-shift angle of m parallel arms is defined as $2\pi/m$.

Optionally, the control module CM is configured that carrier phases of arms (arm 1 to arm 3 in FIG. 6B) are interleaving.

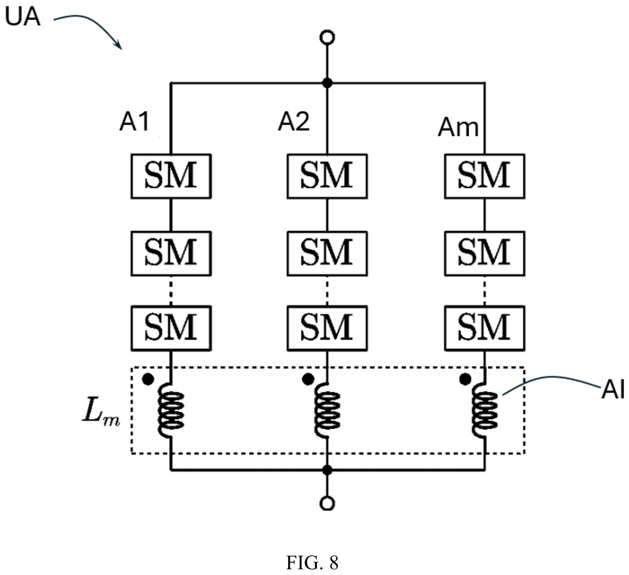

Referring to FIG. 8, FIG. 8 is a diagram illustration of three parallel arms with coupled inductors according to an embodiment of the disclosure. One embodiment of the disclosure further provides a modular multilevel converter MMC, including: a phase leg PL including a upper arm UA and a lower arm LA connected in series, wherein the upper arm UA includes a plurality of arms A1 to Am connected in parallel, wherein each of the arms A1 to Am includes a chain link CL and an arm inductor AI connected in series, wherein the chain link CL includes a plurality of submodules SM connected in series, wherein each submodule SM includes a half-bridge circuit HB or a full-bridge circuit FB, and wherein the arm inductors AI of each arm A1 to Am connected in parallel are coupling to each other.

One embodiment of the disclosure further provides a modular multilevel converter MMC according to any one of abovementioned embodiments, wherein the arm inductors AI of each arm A1 to Am connected in parallel are coupling to each other.

In addition to the individual arm inductor AI for each parallel arm, the coupled arm inductor AI can be used as shown in FIG. 8. Considering the symmetrical structure, the coupled inductor $L_m$ can be defined in (9), where $L$ is the self-inductance, and $M$ is the mutual inductance. The mutual inductance could be designed to optimize the current quality and overall inductor volume.

$$L_m = \begin{bmatrix} L & M & \cdots & M \\ M & L & & M \\ \vdots & & \ddots & \vdots \\ M & M & \cdots & L \end{bmatrix} \qquad (9)$$

Compared to prior art, the parallel arms of the embodiment of the disclosure can reuse the available SM design so that the power scaling of the MMC gets substantially facilitated. The control module of the embodiment of the disclosure provides close-loop control of current sharing and energy balancing control among the parallel arms. The SM capacitor voltages of the parallel arms are balanced as well. Further, the modulation stage of parallel arms could be interleaved to improve the current quality. Switching frequency harmonics in the total arm current are reduced a lot. Moreover, the coupled arm inductors of the embodiment of the disclosure optimize the total volume of arm inductors.

The above description is to illustrate the characteristics of the disclosure through preferred embodiments. The purpose is to enable those skilled in the art to understand the content of the disclosure and implement it accordingly, but not to limit the patent scope of the application. Therefore, any other equivalent modifications or modifications that do not depart from the technical ideas disclosed in this application shall still be included in the claim scope described below.

## Claims

1. A modular multilevel converter (MMC), comprising:
   a phase leg (PL) comprising a upper arm (UA) and a lower arm (LA) connected in series, wherein the upper arm (UA) comprises a plurality of arms (A1 to Am) connected in parallel, wherein one of the arms (A1 to Am) comprises a chain link (CL) and an arm inductor (AI) connected in series, wherein the chain link (CL) comprises a plurality of submodules (SM) connected in series, and wherein each submodule (SM) comprises a half-bridge circuit (HB) or a full-bridge circuit (FB).

2. The modular multilevel converter (MMC) according to claim 1, further comprising a control module (CM) connected to the plurality of submodules (SM), wherein the control module (CM) is configured to provide a voltage reference value ( $v^*_{paj}$ ) for each arm (A1 to Am) by combining a common mode voltage reference value ( $\bar{v}^*_{pa}$ ) for all of the arms (A1 to Am) and a differential mode voltage reference value ( $\Delta\ v^*_{paj}$ ) for each arm (A1 to Am).

**3.** The modular multilevel converter (MMC) according to claim 2, wherein the differential mode voltage reference value ( $\Delta\ v_{paj}^{*}$ ) for each arm (A1 to Am) is obtained from an output of a current loop combining a differential mode current component ($\triangle\ i_{paj}$) of each arm (A1 to Am) and a differential mode current reference value ( $\Delta\ i_{paj}^{*}$ ) for each arm (A1 to Am).

**4.** The modular multilevel converter (MMC) according to claim 3, wherein the differential mode current reference value ( $\Delta\ i_{paj}^{*}$ ) for each arm (A1 to Am) is obtained from an output of a proportional-integral controller (PI), and wherein the control module (CM) further comprises a parallel energy balancing block configured to provide a differential mode voltage component ($\triangle\ v_{Cpaj}$) of each arm (A1 to Am) to the proportional-integral controller (PI)

**5.** The modular multilevel converter (MMC) according to claim 1, further comprising: a control module (CM) connected to the plurality of submodules (SM), wherein the control module (CM) is configured to provide a voltage reference value ( $v_{paj}^{*}$ ) for each arm (A1 to Am) from an output of a current loop inputting a current reference value ( $i_{paj}^{*}$ ) for each arm (A1 to Am).

**6.** The modular multilevel converter (MMC) according to claim 5, wherein the current reference value ( $i_{paj}^{*}$ ) for each arm (A1 to Am) is obtained by combining a common mode current reference value ( $\frac{1}{m} i_{pa}^{*}$ ) for each arm (A1 to Am) and a differential mode current reference value ( $\Delta\ i_{paj}^{*}$ ) for each arm (A1 to Am).

**7.** The modular multilevel converter (MMC) according to claim 6, wherein the differential mode current reference value ( $\Delta\ i_{paj}^{*}$ ) for each arm (A1 to Am) is obtained from an output of a proportional-integral controller (PI), and wherein the control module (CM) further comprises a parallel energy balancing block configured to provide a differential mode voltage component ($\triangle\ v_{Cpaj}$) of each arm to the proportional-integral controller (PI)

**8.** The modular multilevel converter (MMC) according to claim 6, wherein the common mode current reference value ( $\frac{1}{m} i_{pa}^{*}$ ) for each arm (A1 to Am) is obtained by dividing a current reference value ( $i_{paj}^{*}$ ) of the upper arm (UA) with a number (m) of the arms (A1 to Am) in the upper arm (UA).

**9.** The modular multilevel converter (MMC) according to claim 1, further comprising: a control module (CM) connected to the plurality of submodules (SM), wherein the control module (CM) is modulated by a phase-shift method that carrier phases of submodules (SM) in the arm (A1 to Am) are interleaving, and carrier phases of arms (A1 to Am) are interleaving.

**10.** The modular multilevel converter (MMC) according to claim 9, wherein a capacitor voltage reference value ( $V_{CSM,x}^{*}$ ) for each submodule (SM) in one of the arms (A1 to Am) is provided to the phase-shift method to determine which submodule (SM) is bypassed.

**11.** The modular multilevel converter (MMC) according to claim 10, wherein the capacitor voltage reference value ( $V_{CSM,x}^{*}$ ) for each submodule (SM) in one of the arms (A1 to Am) is obtained by combining a common mode capacitor voltage reference value ( $V_{CSM}^{*}$ ) and differential mode capacitor voltage reference value ( $\Delta\ V_{CSM,x}^{*}$ ) for each submodule (SM) in one of the arms.

**12.** The modular multilevel converter (MMC) according to claim 1, further comprising: a control module (CM) connected to the plurality of submodules (SM), wherein the control module (CM) is modulated by a level-shift method.

**13.** The modular multilevel converter (MMC) according to claim 12, wherein a capacitor voltage reference value (

$V^*_{CSM,x}$ ) for each submodule (SM) is provided to the level-shift method to determine which submodule (SM) is bypassed.

**14.** The modular multilevel converter (MMC) according to claim 12, wherein the control module (CM) is configured that carrier phases between different arms (A1 to Am) are interleaving.

**15.** The modular multilevel converter (MMC) according to any one of claim 1 to claim 14, wherein the arm inductors (AI) of each arm (A1 to Am) connected in parallel are coupling to each other.

MMC
CL
AI
UA
PL
LA
CM
SM
$+0.5V_{DC}$
$-0.5V_{DC}$

FIG. 1A

HB
FB
$V_{SM}$
$C_{SM}$

FIG. 1B

UA
A1
A2
Am
SM
SM
SM
SM
SM
SM
SM
SM
SM
AI
AI
AI

FIG. 2

UA
A1
A2
A3
$v_{pa1}$
$v_{pa2}$
$v_{pa3}$
$sw_{pa1}$
$sw_{pa2}$
$sw_{pa3}$
$L_b$
$L_b$
$L_b$
$i_{pa1}$
$i_{pa2}$
$i_{pa3}$

FIG. 3A

UA
A1
A2
A3
$\overline{v}_{pa}$
$\overline{v}_{pa}$
$\overline{v}_{pa}$
$\Delta v_{pa1}$
$\Delta v_{pa2}$
$\Delta v_{pa3}$
$sw_{pa1}$
$sw_{pa2}$
$sw_{pa3}$
$L_b$
$L_b$
$L_b$
$i_{pa1}$
$i_{pa2}$
$i_{pa3}$

FIG. 3B

UA
$\overline{v}_{pa}$
+
−
$\overline{sw}_{pa}$
$\frac{L_b}{3}$
$3\,\overline{i}_{pa}$

FIG. 3C

UA
A1
A2
A3
$\Delta v_{pa1}$
$\Delta v_{pa2}$
$\Delta v_{pa3}$
+
−
$\Delta sw_{pa1}$
$\Delta sw_{pa2}$
$\Delta sw_{pa3}$
$L_b$
$L_b$
$L_b$
$\Delta i_{pa1}$
$\Delta i_{pa2}$
$\Delta i_{pa3}$

FIG. 3D

$v_{dc}^*$
$v_{dc}$
DC voltage control
$i_{dc}^*$
$W^*$
$W$
Total energy control
$i_{ac}^*$
$\Delta W$
Energy Balancing
$i_{cirj}^*$
Synthesize
$i_{pa}^*$
Current Loop 1
$\overline{v}_{pa}^*$
$v_{paj}^*$
$\overline{v}_{Cpaj}$
$\frac{1}{m}\sum$
PI
$\Delta i_{paj}^*$
Current Loop 2
$\Delta v_{paj}^*$
$i_{paj}$
$\Delta i_{paj}$

FIG. 4A

$v_{dc}^*$
$v_{dc}$
DC voltage control
$i_{dc}^*$
$W^*$
$W$
Total energy control
$i_{ac}^*$
$\Delta W$
Energy Balancing
$i_{cirj}^*$
Synthesize
$i_{pa}^*$
$1/m$
$i_{paj}^*$
Current Loop
$v_{paj}^*$
$\Delta i_{paj}^*$
$\overline{v}_{Cpaj}$
$\frac{1}{m}\sum$
PI

FIG. 4B

$v^*_{armj}$
$\frac{1}{N}$
$V^*_{CSM}$
$V^*_{CSM,x}$
$\bar{V}_{CSM}$
Sign($i'_{arm}$)
$V_{CSM,x}$
$k_b$
SM
SM
SM
$m$ arms


FIG. 5A

Carrier waveforms of arm A1
1
0
−1
$C_1$
$C_2$
$C_3$
$C_4$
$C_5$
Carrier waveforms of arm A2
1
0
−1
$C_1$
$C_2$
$C_3$
$C_4$
$C_5$
Carrier waveforms of arm A3
1
0
−1
$C_1$
$C_2$
$C_3$
$C_4$
$C_5$
$T_s/N$
$T_s/(mN)$
$T_s$

FIG. 5B

$v_{arm}^*$
Level-shift carrier
⩾
1(−1), PWM, 0
$V_{CSM}$
$i_{arm}$
Sorting
&
Select
1(−1)
0
SM
SM
SM
1
m arms

FIG. 6A

Carrier waveforms of arm A1
1
0
C5
C4
C3
C2
C1
Carrier waveforms of arm A2
1
0
C5
C4
C3
C2
C1
Carrier waveforms of arm A3
1
0
C5
C4
C3
C2
C1
Ts/m
Ts

FIG. 6B

AC Voltage
× 1e4
1
0
-1
Upper and Lower Arm Currents
200
100
0
SM Capacitor Voltages
1050
1000
950
0.83
0.84
0.85
0.86
0.87
0.88
0.89

FIG. 7A

AC Voltage
× 1e4
1
0
-1
Upper and Lower Arm Currents
200
100
0
Three parallel arm currents
50
0
SM Capacitor Voltages
1050
1000
950
0.84
0.85
0.86
0.87
0.88
0.89
0.90

FIG. 7B

UA
A1
A2
Am
SM
SM
SM
SM
SM
SM
SM
SM
SM
$L_m$
AI

FIG. 8

# EUROPEAN SEARCH REPORT

Application Number
EP 26 16 7779

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GAO CONGZHE ET AL: "A New Parallel-Connected Diode-Clamped Modular Multilevel Converter With Voltage Self-Balancing", IEEE TRANSACTIONS ON POWER DELIVERY IEEE SERVICE CENTER, NEW YORK, NY., US, vol. 32, no. 3, 1 June 2017 (2017-06-01), pages 1616-1625, XP011647903, ISSN: 0885-8977, DOI: 10.1109/TPWRD.2017.2670662 [retrieved on 2017-05-01] | 1,9-15 | INV. H02M7/483 |
| Y | * figures 6-8 * * page 1619 * | 2-8 | |
| | ----- | | |
| Y | REDDY GOVIND AVINASH ET AL: "Circulating Current Optimization Control of MMC", IEEE TRANSACTIONS ON INDUSTRIAL ELECTRONICS IEEE SERVICE CENTER, PISCATAWAY, NJ., USA, vol. 68, no. 4, 6 March 2020 (2020-03-06), pages 2798-2811, XP011825819, ISSN: 0278-0046, DOI: 10.1109/TIE.2020.2977565 [retrieved on 2020-12-15] | 2-4 | |
| A | * figure 7 * * page 2803 - page 2804 * | 1,5-15 | |
| | ----- | | |
| | -/-- | | |

TECHNICAL FIELDS SEARCHED (IPC)
H02M

The present search report has been drawn up for all claims

1

| Place of search | Date of completion of the search | Examiner |
|---|---|---|
| The Hague | 15 July 2026 | Riehl, Philippe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches Patentamt
European Patent Office
Office européen des brevets

# EUROPEAN SEARCH REPORT

Application Number
EP 26 16 7779

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | SI YUNPENG ET AL: "Control Strategy and Simulation of a Modular Multilevel Converter (MMC) Based Pump-Back System for Variable Speed Drive Application", 2018 IEEE ENERGY CONVERSION CONGRESS AND EXPOSITION (ECCE) IEEE, 23 September 2018 (2018-09-23), pages 6049-6053, XP033464401, DOI: 10.1109/ECCE.2018.8558361 [retrieved on 2018-12-03] | 3-8 | |
| A | * figure 4 * * page 6051 * ----- | 1,2,9-15 | |
| A | JIA MING ET AL: "Evaluation and Comparison of Different Topologies for a Grid Emulator", 2021 IEEE 22ND WORKSHOP ON CONTROL AND MODELLING OF POWER ELECTRONICS (COMPEL) IEEE, 2 November 2021 (2021-11-02), pages 1-8, XP034058219, DOI: 10.1109/COMPEL52922.2021.9646040 [retrieved on 2021-12-09] * figure 2 * ----- | 1-15 | TECHNICAL FIELDS SEARCHED (IPC) |
| A | CN 119 483 189 A (STATE GRID CORP CHINA; CHINA ELECTRIC POWER RES INST CO LTD ET AL.) 18 February 2025 (2025-02-18) * figure 3 * * paragraph [0120] - paragraph [0122] * ----- | 1-15 | |

1

The present search report has been drawn up for all claims

| Place of search | Date of completion of the search | Examiner |
|---|---|---|
| The Hague | 15 July 2026 | Riehl, Philippe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT ON EUROPEAN PATENT APPLICATION NO.

EP 26 16 7779

This annex lists the patent family members relating to the patent documents cited in the above-mentioned European search report. The members are as contained in the European Patent Office EDP file on
The European Patent Office is in no way liable for these particulars which are merely given for the purpose of information.

15-07-2026

| Patent document cited in search report | Publication date | Patent family member(s) | Publication date |
|---|---|---|---|
| CN 119483189 A | 18-02-2025 | NONE | |

EPO FORM P0459

For more details about this annex : see Official Journal of the European Patent Office, No. 12/82